Europäisches Patentamt

European Patent Office

Office européen des brevets

(11) Publication number: **0 328 660**

**A1**

# EUROPEAN PATENT APPLICATION
## published in accordance with Art. 158(3) EPC

(21) Application number: 88906106.5

(22) Date of filing: 20.07.88

(86) International application number: PCT/JP88/00721

(87) International publication number: WO 89/00729 (26.01.89 89/03)

(51) Int. Cl.4: **G06F 12/00 , G06F 12/08**

(30) Priority: 22.07.87 JP 183154/87

(43) Date of publication of application: 23.08.89 Bulletin 89/34

(84) Designated Contracting States: DE FR GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi Suginami-ku
Tokyo 168(JP)
Inventor: TAKEGAHARA, Takashi
Shanbohru Hachioji 604 4-1-9, Myoujin-cho
Hachioji-shi Tokyo 192(JP)
Inventor: MORISAKI, Kazuhiko
3329-1, Funazu Kawaguchiko-cho
Minamitsuru-gun Yamanashi 401-05(JP)

(74) Representative: Billington, Lawrence Emlyn et al
Haseltine Lake & Co. 9 Park Square
Leeds LS1 2LH(GB)

(54) METHOD OF PRESERVING AND LOADING DATA.

(57) An extension region (13) of an internal memory (11) is preserved on an external memory (12). Upon a request for preservation, the contents of the internal memory (11) including control data are stored in a virtual memory (13), i.e., the extension region, for example, by a key operation prior to turning off the power source, while upon a load request, the control data stored in the virtual memory (13) are loaded in the internal memory (11) for example, by a key operation immediately after power-on. Thereafter, the processing is continued based upon the control data, and the contents of the virtual memory (13) may be output as a file.

FIG. I

# DATA PRESERVATION/RESTORATION METHOD

## Technical Field

This invention relates to a data preservation/restoration method in a computer system having a randomly accessible external memory, and more particularly, to a data preservation/restoration method for a case where an external memory is used as an extension of an internal memory in accordance with a virtual storage method.

## Background Art

In applications that handle large quantities of data such as in a CAD/CAM system or the like, the following two cases are considered to be the purpose of data input/output:

(1) a case in which data is exchanged with an external system or in which a system accumulates its own know-how, and

(2) a case in which the state of a daily data update is preserved (e.g., a case in which one day's processing is continued the following day).

The these two cases, the latter requires that data input/output be performed at high speed without being bound by the preservation format of the data. Furthermore, in CAD/CAM applications, it is necessary to handle large quantities of data which exceed the capacity of an internal memory (actual memory).

Accordingly, in a computer system having a randomly accessible external memory (a hard disk, for example), part of the area of the external memory is used as an extension of the internal memory (i.e., as a virtual memory area) in accordance with a virtual storage method, the data in the internal memory are temporarily saved in the virtual memory, and the data in the virtual memory are recovered in the internal memory whenever required.

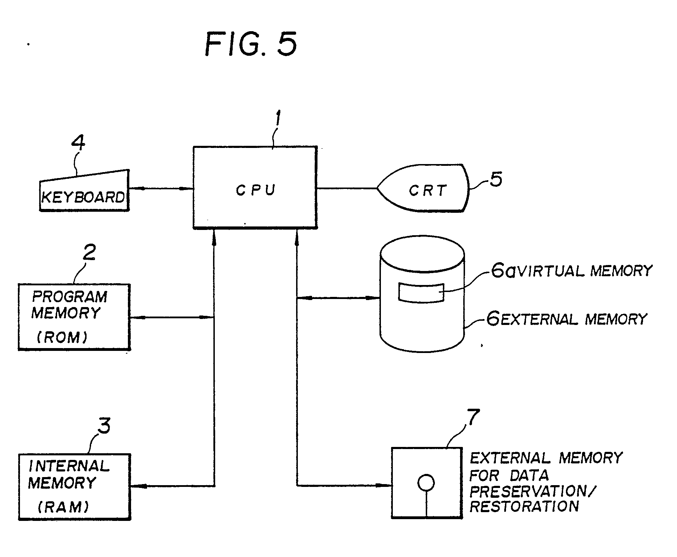

Fig. 5 is a block diagram of a computer system for describing a conventional data preservation/restoration system. Numeral 1 denotes a processor, 2 a program memory (ROM), 3 an internal memory (actual memory) constituted by a RAM, 4 a keyboard, 5 a CRT and 6 an external memory (e.g., a hard disk) having a virtual memory area 6a serving as an extension of the internal memory, and 7 an external memory (e.g., a floppy) for data preservation/restoration.

Since the virtual memory area 6a is an extension of the internal memory (actual memory), the data stored in this memory will vanish when the system power supply is turned off. More specifically, though the data in the virtual memory do not actually vanish, the management information supporting virtual storage that is stored in the internal memory 3 is erased, as a result of which the data in the virtual memory can no longer be utilized. This is equivalent to erasure of these data. In the conventional system, therefore, the data in the internal memory 13 and virtual memory area 6a are preserved in the external memory 7 for data preservation/restoration before the power supply is turned off. Then, after the reintroduction of power, the preserved data from the external memory 7 for data preservation/restoration are restored in the virtual memory area 6a.

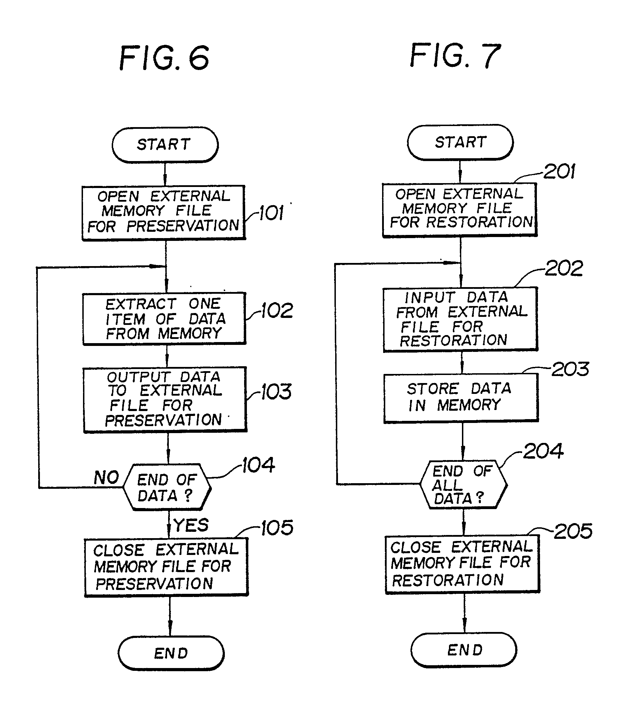

Fig. 6 is a flowchart of data preservation processing. When a predetermined key is pressed before power is turned off, a file is opened in the external memory 7 for preservation/restoration (step 101), then data are successively read from the internal memory 3 and virtual memory area 6a and stored in the external memory 7 (steps 102, 103). When all data are stored (step 104), the file in the external memory 7 for data preservation/restoration is closed (step 105) and data preservation processing is terminated. The power supply is turned off following termination of the above-described processing.

Fig. 7 is a flowchart of data restoration processing. When a predetermined key is pressed after power is turned on, a file is opened in the external memory 7 for preservation/restoration (step 201), then data are read from the external memory 7 and successively stored in the internal memory 3 and virtual memory area 6a (steps 202, 203). When all data are stored (step 204), the file in the external memory 7 for data preservation/restoration is closed and data reconstruction processing is terminated.

In accordance with the above-described system, preservation/restoration of data is possible but a problem is encountered in that a large quantity of data must be transferred between the virtual memory area or the internal memory and the external memory for preservation/restoration whenever the power supply is turned off and turned on. Consequently, considerable time is required for the system to be brought on line and for the system to be shut down. The result is a decline in the overall processing efficiency of the system.

Accordingly, an object of the present invention is to provide a data preservation/restoration system in which it is unnecessary to provide a separate external memory for data preservation/restoration and unnecessary to re-preserve the data in a virtual memory in a separage external memory whenever power is turned off or turned on.

Disclosure of the Invention

The invention is characterized by securing an area, which is an extension of the internal memory, in an external memory, storing data inclusive of management information and contained in the internal memory in a virtual memory, which serves as the extension area, in response to a preservation request, e.g., operation of a key before power is turned off, recovering the management information, which is stored in the virtual memory, in the internal memory in response to a recovery request, e.g., operation of a key immediately after power is turned on, and thereafter continuing processing based on the management information or outputting as a file the data in the virtual memory.

Brief Description of the Drawings

Fig. 1 is a view for describing the general features of the present invention;

Fig. 2 is a flowchart of processing in a case where data are transferred from an actual memory to a virtual memory during the execution of processing;

Figs. 3 and 4 are flowcharts of processing when data in an actual memory are preserved or restored depending upon the will of the operator, respectively;

Fig. 5 is a block diagram of a system for describing the prior-art method; and

Figs. 6 and 7 are flowcharts of processing in a conventional system.

Best Mode for Carrying Out the Invention

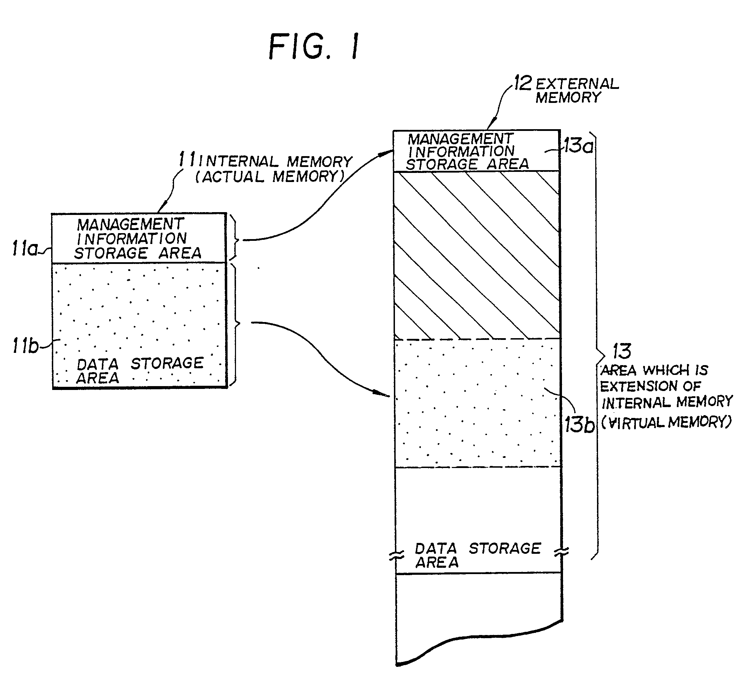

Fig. 1 is a view for describing the general features of the invention and shows only the required memories. Numeral 11 denotes an internal memory (actual memory) constituted by a RAM and provided within a computer. The internal memory 11 has a management information storage area 11a which stores management information for supporting virtual storage, and a data storage area 11b for storing input/output data.

Numeral 12 denotes an external memory such as a hard disk. An area 13 which is part of this memory is used as an extension (virtual memory) of the internal memory 11, and the data stored here is recognized as a "file" in terms of mangaging the system. That is, the content of area 13 is treated as a file having a predetermined name that is present. An area 13a located at the head of the virtual memory 12 and composed of several hundred bytes is reserved in order to store the management information. The remaining area 13b is utilized as a data storage area.

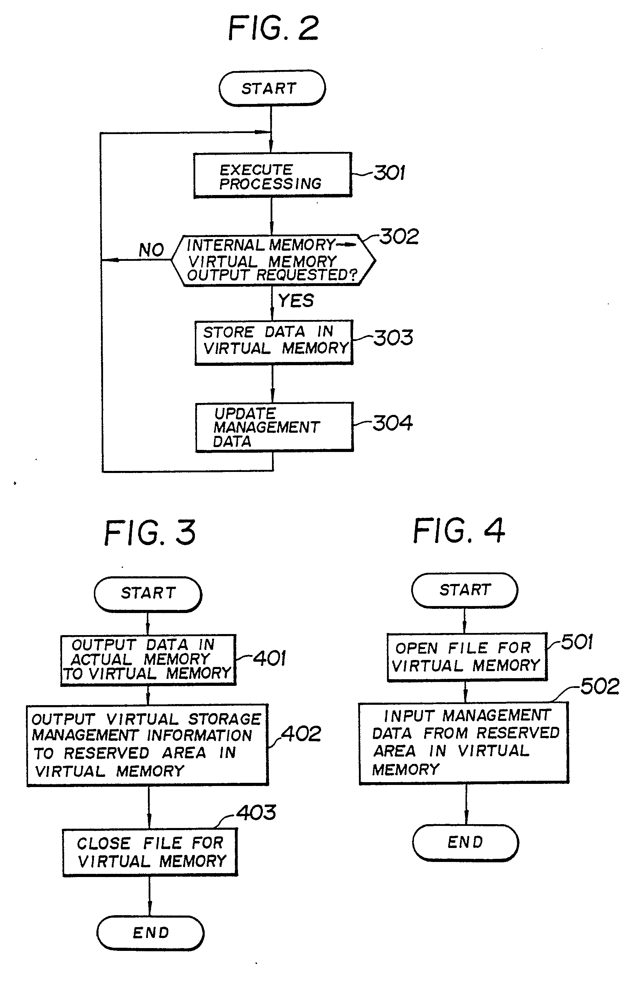

Fig. 2 is a flowchart of processing for a case where data are transferred from the actual memory 11 to the data storage area 13b of the virtual memory during the execution of processing by the CPU.

During the execution of processing (step 301), it is determined (step 302) whether conditions for transmitting the contents of actual memory 11 to virtual memory 13 have been met. If the conditions have been met and the actual memory 11 is full, then all or some of the data in the data storage area 11b of the actual memory are stored in the virtual memory 13 (step 303), after which management information for supporting virtual storage stored in the management information storage area 11a of the actual memory 11 is updated (step 304). After updating is performed, processing from step 301 onward is repeated.

Examples of management information are information necessary for deciding at which location of the virtual memory 13 to store the present data in virtual memory 11, information indicating the size of the blank space in the memory, and information for establishing coincidence between the states of the system interior before power is cut off and after power is introduced. Accordingly, in the processing of step 303, the processor stores the data contained in the actual memory 11 at a predetermined blank location of the virtural memory 13 based on the management information, and the processor updates the management information in step 304.

Fig. 3 is a flowchart of processing for a case where the contents of actual memory 11 are stored in virtual memory 13b in accordance with the will of the operator. For example, in a case where processing is interrupted in mid-course and the remaining processing is to be executed by being resumed at a later date, the operator presses a predetermined key to generate a preservation request before power is turned off. In response, processing in accordance with the flowchart of Fig. 3 starts. Specifically, as in the processing of steps 303, 304 in Fig. 2, the data in the data storage area 11b of actual memory 11 are outputted to the virtual memory 13 (step 401), the management information is updated, the updated management information is stored in the management information storage area 13a of virtual memory 13 (step 402) and then the virtual memory file is closed (step 403). As a result of this processing, the contents of the actual memory 11 are preserved in the virtual memory 13, after which power is cut off.

Fig. 4 if a flowchart of processing for recovering the contents of the actual memory in accordance with the will of the operator. By way of example, in order to resume processing, which was interrupted at an earlier date, after the introduction of power, the operator presses a predetermined key to generate a recovery request. When this is done, the processing indicated by the flowchart of Fig. 4 starts. Specifically, in response to operation of the key, the processor opens a file in the virtual memory (step 501) and subsequently reads the management information from the management information storage area 13a of virtual memory 13 and stores the information in the management information storage area 11a of the actual memory (step 502). When this is done, subsequent continuation of processing becomes possible. It should be noted that if it is necessary for data which prevailed prior to the cut-off of power at an earlier date to be recovered in the actual memory 11, these data are recovered in the actual memory automatically using the management information.

If it is necessary to print out or display the contents of the virtual memory, it will suffice to input a predetermined file name after issuance of a printing request or display request.

Thus, according to the present invention, the arrangement is such that an area used as an extended area of an internal memory (actual memory) is secured in an external memory as an area for storing a file for the purpose of managing the system, either the contents of the internal memory (actual memory) inclusive of management information supporting virtual storage are preserved as necessary in the secured area (virtual memory) of the external memory or processing is continued upon recovering preserved data on the basis of management information stored in the virtual memory, and the data in the virtual memory are outputted as a file. Accordingly, it is unnecessary to provide a separate external memory for data preservation/restoration and to re-preserve the contents of the virtual memory in a separate external memory whenever power is turned off or turned on. This makes high-speed processing possible and enables the contents of the virtual memory to be freely copied, deleted and outputted in the form of a file.

1. A data preservation/restoration method in a computer system having a randomly accessible external memory, part of said external memory being used as an extension of an internal memory in accordance with a virtual storage method, characterized by:
securing a virtual memory area, which is used as an extension area of the internal memory, in the external memory;
outputting and preserving, in said secured virtual memory area of the external memory in response to a preservation request, contents of the internal memory inclusive of management information which is for supporting virtual storage;
recovering the management information, which is stored in said virtual memory area, in the internal memory in response to a recovery request; and
executing predetermined processing based on said management information.

2. A data preservation/restoration method according to claim 1, characterized by:
treating all data stored in said virtual memory area as one file having a predetermined file name;
opening said file in response to said recovery request; and
subsequently reading management information, which is contained in said file, and recovering said information in the internal memory.

3. A data preservation/restoration method according to claim 2, characterized by copying, printing out and displaying said file in response to requests.

4. A data preservation/restoration method according to claim 1, characterized by restoring a previous state of the internal memory on the basis of the management information recovered in the internal memory, and continuing processing which was being executed prior to preservation.

5. A data preservation/restoration method according to claim 1, characterized by preserving data of the internal memory in said virtual memory area based on the management information in response to a preservation request, and subsequently updating said management information and preserving it in a predetermined location of said virtual memory area.

6. A data preservation/restoration method according to claim 5, characterized by reading the management information from said predetermined location and recovering it in the internal memory in response to a preservation request.

# FIG. 1

# FIG. 2

START

EXECUTE PROCESSING ⟵ 301

INTERNAL MEMORY→ VIRTUAL MEMORY OUTPUT REQUESTED? ⟵ 302

NO

YES

STORE DATA IN VIRTUAL MEMORY ⟵ 303

UPDATE MANAGEMENT DATA ⟵ 304

# FIG. 3

START

OUTPUT DATA IN ACTUAL MEMORY TO VIRTUAL MEMORY ⟵ 401

OUTPUT VIRTUAL STORAGE MANAGEMENT INFORMATION TO RESERVED AREA IN VIRTUAL MEMORY ⟵ 402

CLOSE FILE FOR VIRTUAL MEMORY ⟵ 403

END

# FIG. 4

START

OPEN FILE FOR VIRTUAL MEMORY ⟵ 501

INPUT MANAGEMENT DATA FROM RESERVED AREA IN VIRTUAL MEMORY ⟵ 502

END

# FIG. 5

# FIG. 6

```
       START

OPEN EXTERNAL
MEMORY FILE          ~101
FOR PRESERVATION

EXTRACT ONE
ITEM OF DATA         ~102
FROM MEMORY

OUTPUT DATA
TO EXTERNAL          ~103
FILE FOR
PRESERVATION

NO     END OF         ~104
       DATA ?

       YES           ~105

CLOSE EXTERNAL
MEMORY FILE FOR
PRESERVATION

        END
```

# FIG. 7

```
       START

OPEN EXTERNAL        ~201
MEMORY FILE
FOR RESTORATION

INPUT DATA           ~202
FROM EXTERNAL
FILE FOR
RESTORATION

STORE DATA           ~203
IN MEMORY

       END OF         ~204
       ALL
       DATA ?

CLOSE EXTERNAL       ~205
MEMORY FILE FOR
RESTORATION

        END
```

# INTERNATIONAL SEARCH REPORT

International Application No PCT/JP88/00721

## I. CLASSIFICATION OF SUBJECT MATTER (if several classification symbols apply, indicate all) 6

According to International Patent Classification (IPC) or to both National Classification and IPC

Int.Cl⁴    G06F12/00, G06F12/08

## II. FIELDS SEARCHED

| Minimum Documentation Searched 7 | |
|---|---|
| Classification System | Classification Symbols |
| IPC | G06F12/00, G06F12/08 |

Documentation Searched other than Minimum Documentation
to the Extent that such Documents are included in the Fields Searched 8

| | |
|---|---|
| Jitsuyo Shinan Koho | 1926 - 1987 |
| Kokai Jitsuyo Shinan Koho | 1971 - 1987 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 62-137646 (NEC Corporation) 20 June 1987 (20. 06. 87) (Family: none) | 1 |
| A | JP, A, 59-227094 (Toshiba Corp.) 20 December 1984 (20. 12. 84) (Family: none) | 1 |
| P | JP, A, 62-169243 (Mitsubishi Electric Corporation) 25 July 1987 (25. 07. 87) (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 13, 1988 (13. 09. 88) | October 3, 1988 (03. 10. 88) |
| International Searching Authority | Signature of Authorized Officer |
| Japanese Patent Office | |

Form PCT/ISA/210 (second sheet) (January 1985)